# EUROPEAN PATENT APPLICATION

(11) **EP 2 538 319 A1**
(43) Date of publication of application: **26.12.2012**
(21) Application number: 11192739.8
(22) Date of filing: 09.12.2011
(51) Int. Cl.: G06F 9/30, G06F 1/24, G06F 9/44, H03K 3/037, H03K 19/20

(54) **Non-volatile data processing apparatus and image forming apparatus**

(30) Priority: 21.06.2011 JP 2011137765
(71) Applicant: Fuji Xerox Co., Ltd., Tokyo (JP)
(72) Inventor: Kikuta, Masayoshi, Yokohama-shi, Kanagawa (JP); Murata, Yuji, Yokohama-shi, Kanagawa (JP); Ikeda, Shinho, Yokohama-shi, Kanagawa (JP); Sakamaki, Tadamasa, Yokohama-shi, Kanagawa (JP); Liu, Binhui, Yokohama-shi, Kanagawa (JP); Hata, Tadashi, Yokohama-shi, Kanagawa (JP); Kasahara, Shunsuke, Yokohama-shi, Kanagawa (JP); Hayashi, Terutake, Yokohama-shi, Kanagawa (JP); Yamamoto, Hiroaki, Yokohama-shi, Kanagawa (JP); Kawashita, Masakazu, Yokohama-shi, Kanagawa (JP); Yamasaki, Hideki, Yokohama-shi, Kanagawa (JP); Bando, Yoshifumi, Yokohama-shi, Kanagawa (JP)
(74) Representative: Lewin, David Nicholas

(57) **Abstract**

A data processing apparatus includes an operation unit, a writable and readable volatile register, a writable and readable nonvolatile memory, first and second writing units and a write-back unit. The operation unit performs an arithmetic operation and a logical operation. The writable and readable volatile register stores data used in the operations performed by the operation unit. The writable and readable nonvolatile memory stores the data in parallel with the volatile register. The data stored in the nonvolatile memory is the data stored in the volatile register. The first writing unit writes the data in the volatile register. The second writing unit writes the data in the nonvolatile memory in parallel with the first writing unit every time the data is written in the volatile register. The write-back unit writes back the data stored in the nonvolatile memory to the volatile register when a power supply is turned on.

## Description

### BACKGROUND

### 1. Technical Field

The present invention relates to a data processing apparatus and an image forming apparatus.

### 2. Related Art

In a data processing apparatus, when power is inputted (turned on), hardware is initialized and thereafter, an operating system (OS) and an application program (program) are loaded (written) into a main memory. An address on the main memory storing the beginning address of a program to be executed is set in a program counter (PC). As a result, the data processing apparatus becomes an operable state.

JP-2005-010897-A discloses a calculator system in which a system is initiated from a main memory image stored in a nonvolatile memory unit. The nonvolatile memory unit constitutes a part of a main memory device. When a writing access occurs for the first time after the system is operated for every area of a predetermined width of the main memory image, data of the area is copied to a writable and readable main memory unit constituting another part of the main memory device to write on the copy, and thereafter, the access to the main memory image area which is completed with the copy is switched into the access to the copy.

JP-2010-026674-A discloses a semiconductor integrated circuit that uses the nonvolatile memory without restricting the number of rewrite times as an operation data storing area. The semiconductor integrated circuit includes a CPU that performs a predetermined operation with respect to a plurality of data which are stored in an address designated by a stack pointer and stored in a predetermined number of addresses subsequent to the designated address in the nonvolatile memory. The CPU stores an operation result of the predetermined operation in the address designated by the stack pointer. And, when a power supply of the CPU is turned off, a value of the stack pointer in a cycle when a power supply of the CPU is turned off is stored first in a predetermined address in the nonvolatile memory, and thereafter, the power supply of the CPU is turned off.

### SUMMARY

However, when an off state is switched to an on state, the data processing apparatus is required to return immediately to the state just before being switched to the off state and continuously process information from the state just before being switched to an off state.

The present invention has been made in an effort to provide a data processing apparatus that can continuously process information from a state just before being switched to an off state by returning to the state just before being switched to the off state when a power supply is switched to an on state.
(1) According to an aspect of the invention, a data processing apparatus includes an operation unit, a writable and readable volatile register, a writable and readable nonvolatile memory, a first writing unit, a second writing unit and a write-back unit. The operation unit performs an arithmetic operation and a logical operation. The writable and readable volatile register stores data used in the operations performed by the operation unit. The writable and readable nonvolatile memory stores the data in parallel with the volatile register. The data stored in the nonvolatile memory is the data stored in the volatile register. The first writing unit writes the data in the volatile register. The second writing unit writes the data in the nonvolatile memory in parallel with the first writing unit every time the data is written in the volatile register. The write-back unit writes back the data stored in the nonvolatile memory to the volatile register when a power supply of the data processing apparatus is turned on.
(2) The data processing apparatus further includes a data transmission bus. The data transmission bus is between the nonvolatile memory and the volatile register. The write-back unit writes back the data stored in the nonvolatile memory to the volatile register through the data transmission bus.
(3) In the data processing apparatus, the nonvolatile memory stores a reset vector for resetting the data processing apparatus in addition to the data used in the operations performed by the operation unit. The data processing apparatus further includes a designation unit which designates which one of the data and the reset vector is written back to the volatile register. The write-back unit writes back any one of the data and the reset vector which is designated by the designation unit to the volatile register.
(4) The data processing apparatus further includes a nonvolatile reset vector memory, a designation unit and a switching unit. The nonvolatile reset vector memory stores a reset vector for resetting the data processing apparatus. The designation unit designates which one of the data and the reset vector is written back to the volatile register. The switching unit switches a connection to any one of the nonvolatile memory storing the data and the nonvolatile reset vector memory storing the reset vector which is designated by the designation unit. The write-back unit writes back the any one of the data and the reset vector to the volatile register from the nonvolatile memory or the nonvolatile reset vector memory to which the connection is switched by the switch unit.
(5) The data processing apparatus further includes a nonvolatile main memory. The nonvolatile main memory stores a program for controlling at least an operation of the data processing apparatus.
(6) In the data processing apparatus, the nonvolatile memory is any one of an MRAM, a FeRAM, a PRAM, and a ReRAM.
(7) In the data processing apparatus, the nonvolatile main memory is any one of a MRAM, a FeRAM, a PRAM, and a ReRAM.
(8) According to another aspect of the invention, an image forming apparatus includes an image forming unit and an instruction unit. The image forming unit forms an image in a recording medium. The instruction unit controls the image forming unit. The instruction unit includes an operation unit, a writable and readable volatile register, a writable and readable nonvolatile memory, a first writing unit, a second writing unit and a write-back unit. The operation unit performs an arithmetic operation and a logical operation. The writable and readable volatile register stores data used in the operations performed by the operation unit. The writable and readable nonvolatile memory stores the data in parallel with the volatile register. The data stored in the nonvolatile memory is the data stored in the volatile register. The first writing unit writes the data in the volatile register. The second writing unit writes the data in the nonvolatile memory in parallel with the first writing unit every time the data is written in the volatile register. The write-back unit writes back the data stored in the nonvolatile memory to the volatile register when a power supply of the data processing apparatus is turned on.

According to the invention of (1), as compared with a case where a nonvolatile memory is not provided, when a power supply is turned on, a data processing apparatus can be restored to a state just before the power supply is turned off to perform processing continuously from the state just before the power supply is turned off.

According to the invention of (2), as compared with a case where the present configuration is not provided, the data processing apparatus can be rapidly restored to the state just before the power supply is turned off.

According to the inventions of (3) and (4), as compared with the case where the present configuration is not provided, when the power supply is turned on, the data processing apparatus can selectively be either restored to the state just before the power supply is turned off or reset.

According to the invention of (5), as compared with the case where the present configuration is not provided, power for storing the information of a main memory or a transmitting time of main memory data to a hard disk drive can be suppressed.

According to the inventions of (6) and (7), as compared with the case where the present configuration is not provided, the decrease of an operational speed of the data processing apparatus can be suppressed.

According to the invention of (8), as compared with a case where the present configuration is not provided, when a power supply is turned on, an image forming apparatus can be restored to a state just before the power supply is turned off and continuously form an image from the state just before the power supply is turned off.

### BRIEF DESCRIPTION OF THE DRAWINGS

Exemplary embodiments of the inventions will be described in detail based on the following figures, wherein:
Fig. 1 is a diagram showing an example of an overall configuration of a data processing apparatus according to a first embodiment;
Figs. 2A and 2B are diagrams showing an example of configurations of a volatile register and a nonvolatile memory;
Fig. 3 is a flowchart describing a flow until a data processing apparatus becomes operable from an initial state;
Fig. 4 is a diagram describing a route through which data (a reset vector) being stored in a nonvolatile memory (NPC) is transmitted to a volatile register (PC) at step S 102 of Fig. 3;
Fig. 5 is a flowchart describing an operation of a data processing apparatus in an ADD command;
Fig. 6 is a diagram describing the movement of data in an ADD command routine;
Fig. 7 is a flowchart describing a flow until a data processing apparatus becomes operable when a power supply unit of the data processing apparatus is turned on again (restarted);
Fig. 8 is a diagram showing an example of a configuration of an image forming apparatus;
Fig. 9 is a diagram describing the relationship between the image forming apparatus and an apparatus that is connected to a communication line;
Figs. 10A and 10B are diagrams showing a comparison between a normal mode and a power-saving mode of the image forming apparatus;
Fig. 11 is a diagram showing an example of a configuration of a data processing apparatus according to a second embodiment;
Fig. 12 is a diagram showing an example of a configuration of a data processing apparatus according to a third embodiment; and
Fig. 13 is a diagram describing an example of a configuration of a nonvolatile memory in a data processing apparatus according to a fourth embodiment.

### DETAILED DESCRIPTION

Hereinafter, embodiments of the present invention will be described in detail with reference to the accompanying drawings.

### (Data processing apparatus 1)

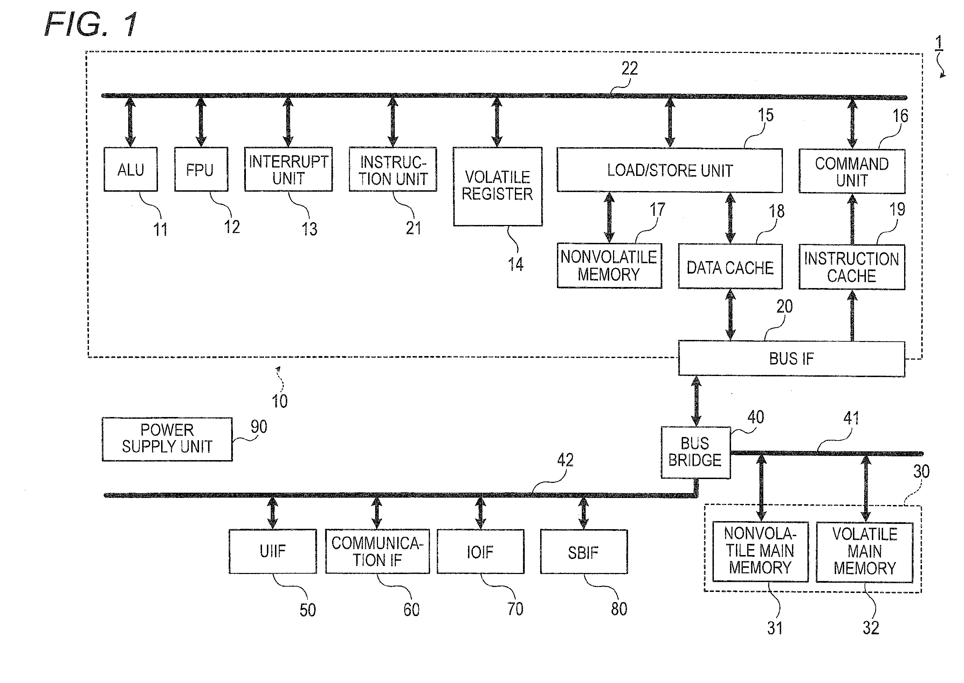

Fig. 1 is a diagram showing an example of an overall configuration of a data processing apparatus 1 according to a first embodiment.

The data processing apparatus 1 includes a central processing unit (hereinafter, referred to as a CPU) 10, a nonvolatile main memory 31 constituted by a writable and readable nonvolatile memory element, a volatile main memory 32 constituted by a writable and readable volatile memory element, a bus bridge 40 connected to a data/address bus 41 and an external bus 42 to be described below, a user input interface (UIIF) 50 into which a signal for controlling the data processing apparatus 1 is inputted from a user, a communication interface (IF) 60 connected to a communication line such as the Internet or a telephone network, an input/output interface (IOIF) 70 connected with an external apparatus, a serial bus interface (SBIF) 80 where serial communication is performed, and a power supply unit 90.

The data processing apparatus 1 further includes the data/address bus 41 and the external bus 42.

Both the volatile memory element and the nonvolatile memory element represent elements having a function (a memory function) to store information ("1"/"0"). "Volatile" means that the function (the memory function) to store the information ("1"/"0") is provided when power is supplied, while the function (the memory function) to store the information ("1"/"0") is lost, that is, the information cannot be kept when the power is not supplied. Meanwhile, "nonvolatile" means that the function (the memory function) to continuously store (memorize) the information ("1"/"0") is provided even when the power is not supplied as well as when the power is supplied.

Each of the volatile and nonvolatile memory elements will be described in detail below.

Herein, the nonvolatile main memory 31 and the volatile main memory 32 constitute a main memory 30. The nonvolatile main memory 31 stores an operating system (hereinafter, referred to as an OS), an application program (hereinafter, referred to as a program), texts, constants, and variables. Meanwhile, the volatile main memory 32 is used as a work area that temporarily stores data. The OS may not be required.

The main memory 30 has a function (the memory function) to store the information ("1"/"0"), an address can be designated by the CPU 10, and then the information ("1"/"0") stored in the area (address) of the main memory 30 designated by the address can be directly written and read (accessed).

Subsequently, the configuration of the CPU 10 will be described.

The CPU 10 includes an arithmetic logical unit (ALU) 11 performing a logical operation and an arithmetic operation as an example of an operation unit, a floating point unit (FPU) 12 performing a floating point operation similarly to an example of the operation unit, and an interrupt unit 13 performing an interrupt processing. The CPU 10 further includes a volatile register 14 constituted by a writable and readable volatile memory element to store (memorize) the data and the address while executing these operation and the processing. Herein, the data and address stored in the volatile register 14 are integrated to be referred to as data.

The CPU 10 further includes an LOAD/STORE unit (a loading/storing unit) 15 to control the reading (loading) and maintaining (storing) of the data, and a command unit 16 decoding a command.

The CPU 10 further includes a nonvolatile memory 17 constituted by the writable and readable nonvolatile memory element. As described below, the nonvolatile memory 17 collaterally stores the data that are stored in the volatile register 14.

The CPU 10 further includes a data cache 18 caching the data, an instruction cache 19 caching the command, and a bus interface (a bus IF) 20 connected with the bus bridge 40.

The CPU 10 further includes an instruction unit 21 that controls the ALU 11, the FPU 12, the interrupt unit 13, the volatile register 14, the LOAD/STORE unit 15, the command unit 16, the nonvolatile memory 17, the data cache 18, the instruction cache 19, and the bus IF 20.

The CPU 10 further includes an internal bus 22 that is connected with the ALU 11, the FPU 12, the interrupt unit 13, the volatile register 14, the LOAD/STORE unit 15, the command unit 16, and the instruction unit 21 to input and output the data or command thereamong.

Herein, it is assumed that various components constituting the CPU 10 such as the ALU 11, the FPU 12, the interrupt unit 13, the volatile register 14, the LOAD/STORE unit 15, the command unit 16, the nonvolatile memory 17, the data cache 18, the instruction cache 19, the bus IF 20, the instruction unit 21, and the internal bus 22 are configured as one semiconductor chip made of for example, silicon. Meanwhile, several units or some of these units may be configured as another semiconductor chip to be placed outside the CPU 10.

In the CPU 10 of the first embodiment, the data cache 18 and the instruction cache 19 have the memory function to store the information ("1"/"0") when the power is supplied, but do not store the information when the power is not supplied. Each of the ALU 11 and the FPU 12 includes operation registers therein and has the memory function to store the information ("1"/"0") when the power is supplied, but loses the memory function not to store the information ("1"/"0") when the power is not supplied. Each of the interrupt unit 13, the command unit 16, the bus IF 20, and the instruction unit 21 includes operation registers therein and has the memory function to store the information ("1"/"0") when the power is supplied, but loses the memory function not to store the information ("1"/"0") when the power is not supplied. Each of the bus bridge 40, the UIIF 50, the communication IF 60, the IOIF 70, and the SBIF 80 is also similarly operated.

As described above, the nonvolatile main memory 31 and the volatile main memory 32 constitute the main memory 30. That is, the nonvolatile main memory 31 and the volatile main memory 32 can be written and read by using a series of addresses.

The nonvolatile main memory 31 and the volatile main memory 32 may be placed in such a way that the addresses are not overlapped with each other in the main memory 30. In this case, the nonvolatile main memory 31 and the volatile main memory 32 may be placed so that the addresses are consecutive or may be skipped between the nonvolatile main memory 31 and the volatile main memory 32. Further, any one of the nonvolatile main memory 31 and the volatile main memory 32 may be earlier (in the order in which the addresses are earlier).

At least one of the nonvolatile main memory 31 and the volatile main memory 32 is divided into two or more, such that the addresses may be configured to be inserted into each other.

The main memory 30 of the data processing apparatus 1 may be constituted by the nonvolatile main memory 31 alone, although explained as being constituted by the nonvolatile main memory 31 and the volatile main memory 32.

Subsequently, the connection in the data processing apparatus 1 will be described.

The bus IF 20 of the CPU 10 is connected to the bus bridge 40 so as to transmit and receive the data, the address, and the command bidirectionally.

The data/address bus 41 and the external bus 42 are connected to the bus bridge 40. The nonvolatile main memory 31 and the volatile main memory 32 constituting the main memory 30 are connected to the data/address bus 41.

The data/address bus 41 includes an address bus and a data bus.

When the address bus, as a signal line for transmitting a signal for the CPU 10 to designate (access) the address of the main memory 30, accesses the address with, for example, a 32-bit width, the address bus is constituted by 32 signal lines.

The data bus is the signal line for transmitting the data or command as the signal in order to read the data or command from the area (address) of the main memory 30 designated by the address. Further, the data bus may be the signal line for transmitting the data as the signal in order to write the data on the area of the main memory 30 designated by the address. That is, when the address of the main memory 30 is designated, the data or command is read from the main memory 30 or the data may be written on the main memory 30.

For example, when the data or command is transmitted and received with the 32-bit width, the data bus is constituted by 32 signal lines.

As described above, the main memory 30 is placed in an address space, for example, a space of 4G when the address is 32 bits, which the CPU 10 can access to transmit and receive data or command of a predetermined bit width (e.g., 4 bytes when the bit width is 32 bits) to and from the area of the main memory 30 designated by the address in parallel bits.

Herein, the data/address bus 41 is separately constituted by the data bus and the address bus, but the data/address bus 41 may be configured to commonly use a part or the entire of each of data bus and the address bus.

The UIIF 50, the communication IF 60, the IOIF 70, and the SBIF 80 are connected to the external bus 42 to transmit and receive the data or command.

Similar to the data/address bus 41, the external bus 42 is also constituted by the number of signal lines corresponding to the bit width to transmit and receive the data or command.

The power supply unit 90 is connected to supply power to each of the CPU 10, the bus bridge 40, the UIIF 50, the communication IF 60, the IOIF 70, and the SBIF 80. Meanwhile, in Fig. 1, a line for supplying power from the power supply unit 90 is not shown.

Subsequently, an internal connection relationship of the CPU 10 will be described.

The ALU 11, the FPU 12, the interrupt unit 13, the volatile register 14, the LOAD/STORE unit 15, the command unit 16, and the instruction unit 21 are connected to the internal bus 22 of the CPU 10 in parallel. The data and the address may be bidirectionally transmit and received between the ALU 11, the FPU 12, the interrupt unit 13, the volatile register 14, the LOAD/STORE unit 15, the command unit 16, and the instruction unit 21, and the internal bus 22.

The internal bus 22 is constituted by 32 signal lines corresponding to the bit width in the case of the bit width in which the data and the address are transmitted/received, for example, 32 bits.

The nonvolatile memory 17 is connected to the LOAD/STORE unit 15 to transmit and receive the data bidirectionally.

The data cache 18 is connected to the LOAD/STORE unit 15 to transmit and receive the data bidirectionally. Further, the data cache 18 is connected to the bus IF 20 to transmit and receive the data to and from the main memory 30 bidirectionally.

The instruction cache 19 is connected to transmit the command to the command unit 16. Further, the instruction cache 19 is connected to the bus IF 20 to receive the command from the main memory 30.

As described above, the nonvolatile memory 17 and the nonvolatile main memory 31, which are constituted by the writable and readable nonvolatile memory elements, have a memory function to continuously store the information (" 1 "/"0") even when the power is not supplied as well as when the power is supplied from the power supply unit 90.

Meanwhile, the volatile register 14 and the volatile main memory 32, which are constituted by the writable and readable volatile memory elements, have the memory function to store the information ("1"/"0") when the power is supplied from the power supply unit 90, but lose the memory function and does not store the information ("1"/"0") when the power is not supplied.

Hereinafter, the nonvolatile memory element will be described while being compared with the volatile memory element. Meanwhile, in the volatile and nonvolatile memory elements, a part (a DRAM to be described below) and a device (an HDD to be described below) configured by collecting cells are also represented as the "element" in addition to elements constituting the cell which is the unit of memory (primarily a bit).

An example of the volatile memory element includes a dynamic RAM (DRAM) storing the information ("1"/"0") depending on the existence of an electric charge stored in a capacitor and a static RAM (SRAM) storing the information ("1"/"0") by a latch effect through a flip-flop (FF). In the DRAM and the SRAM, the cells which are the unit of the memory are placed in matrix in a semiconductor chip. By wirings installed between the cells in a grating pattern and a driving circuit connected to the wirings, any cell can be accessed to write and read the information ("1"/"0"). Therefore, the DRAM and the SRAM are called a random access memory (RAM).

Since the DRAM has the smaller cell size and is used for higher integration than the SRAM, the DRAM is used as the volatile main memory 32 which is required to have a large capacity. However, in the DRAM, the electric charge stored in the capacitor is reduced as time elapses. As a result, a refresh in which the electric charge is restored to an original state at a predetermined time interval is made so as to prevent the stored information ("1"/"0") from being lost as time elapses.

The SRAM stores the information ("1"/"0") by the latch effect by the flip-flop (FF). The SRAM has the larger cell size than the DRAM, but is writable and readable at a higher speed than the DRAM, the SRAM is used in the volatile register 14, the data cache 18, and the instruction cache 19.

Meanwhile, the nonvolatile memory element includes a hard disk drive (HDD) in which a magnetic medium storing the information ("1"/"0") by a direction of magnetic polarity is formed on a disk. The HDD has a large capacity, but writes and reads the information ("1"/"0") by a mechanical mechanism, writing and reading speeds (an access speed) of the information ("1"/"0") are slow.

The nonvolatile memory element includes an electrically erasable programmable ROM (EEPROM) and a flash memory storing the information ("1"/"0") depending on the existence the electric charge stored in a gate electrode (floating gate) of an MOS transistor. The flash memory and the EEPROM may electrically write and read the state ("1"/"0"), but the writing and reading speeds of the flash memory and the EEPROM are expressly slower than the writing and reading speeds of the SRAM and the DRAM. Also, the flash memory and the EEPROM are limited in the number of rewriting times.

The nonvolatile memory element includes a magnetoresistive RAM (referred to as an MRAM), a ferroelectric RAM (referred to as a FeRAM), a phase change RAM (referred to as a PRAM), and a resistance RAM (referred to as a ReRAM).

The MRAM stores the information ("1"/"0") by a magnetoresistive (MR) effect in which resistance of a tunnel magnetoresistive film is changed by a relative angle formed by magnetization of overlapped magnetic laminated films with two magnetic laminated films inserted with the tunnel magnetoresistive film. The FeRAM stores the information ("1"/"0") by the polarization of a ferroelectric such as PZT (Pb(Zr, Ti)O₃). The PRAM stores the information ("1"/"0") by a resistive variation accompanied by a phase variation of chalcogenide. The ReRAM stores the information ("1"/"0") by the resistive variation of a colossal electro-resistance (CER) effect in which electro-resistance is largely varied by applying voltage.

In the nonvolatile memory elements such as the MRAM, the FeRAM, the PRAM, and ReRAM, the cells may be placed on a semiconductor substrate with high density in matrix, and the high-speed writing and reading may be performed by a driving circuit which is integrally formed, like the DRAM and the SRAM. There is, in principle, no limit in the number of rewriting times or the number of rewriting times is very large (hereinafter, referred that the nonvolatile memory elements have less limitation in the number of rewriting times).

Therefore, the nonvolatile memory elements such as the MRAM, the FeRAM, the PRAM, and ReRAM are easily applied to the main memory 30, the data cache 18, and the instruction cache 19, similar to the SRAM and the DRAM.

In the present embodiment, it will be described that the nonvolatile memory 17 and the nonvolatile main memory 31 are constituted by the MRAM as an example. Meanwhile, the nonvolatile memory 17 and the nonvolatile main memory 31 may be constituted by the FeRAM, the PRAM, and the ReRAM in addition to the MRAM. And the nonvolatile memory 17 and the nonvolatile main memory 31 may be the HDD, the flash memory, and the EEPROM when there is no limit in the access speed or the number of rewriting times.

Meanwhile, description will be made assuming that the volatile register 14 is constituted by the SRAM and the volatile main memory 32 is constituted by the DRAM.

### (Volatile register 14 and nonvolatile memory 17)

Subsequently, the volatile register 14 and the nonvolatile memory 17 will be described.

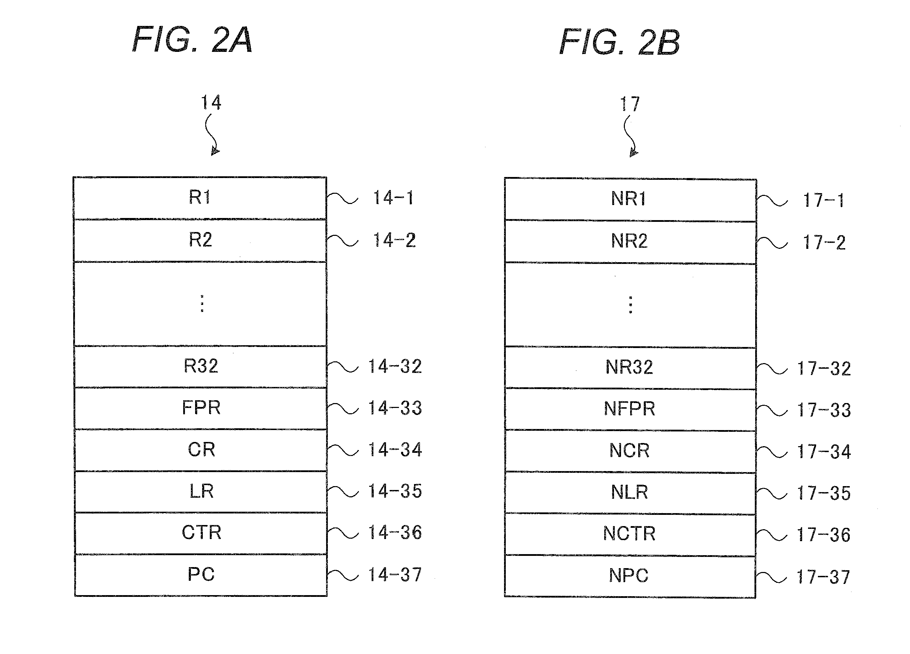

Figs. 2A and 2B are diagrams describing an example of configurations of the volatile register 14 and the nonvolatile memory 17. Fig. 2A shows the configuration of the volatile register 14 and Fig. 2B shows the configuration of the nonvolatile memory 17.

The nonvolatile register 14 shown in Fig. 2A will be described first.

The volatile register 14 includes a plurality of volatile registers 14-1 to 14-37 as an example. The volatile registers 14-1 to 14-37 include addresses (not shown), respectively and are distinguished by the addresses.

The volatile registers 14-1 to 14-32 are general purpose registers (referred to as R1 to R32) of which uses are not fixed. For example, the volatile registers 14-1 to 14-32 are used to store the data and the address for the operation of the ALU 11 and an address (a stack pointer) of a stack formed on the main memory 30. Meanwhile, the stack temporarily stores the data.

The volatile register 14-33 is a floating point register (referred to as the FPR) storing an operation result of the FPU 12.

The volatile register 14-34 as a condition register (status register) (referred to as a CR) stores the condition (status) of the CPU 10. The condition (status) includes an overflow flag which is set when an overflow is generated, a carry flag which is set when a carry is generated, and a negative flag which is set when a minus value is acquired, in the operation of the ALU 11.

The volatile register 14-35 is a link register (referred to as an LR) and stores a restoration address when the volatile register is branched by a subroutine call.

The volatile register 14-36 is a control register (referred to as a CTR) and resets (cancels) various flags of the condition register or makes the CPU 10 to be a low power consumption state by decreasing an operational speed of the CPU 10. As such, the volatile register 14-36 instructs the CPU 10 to be in a special state.

The volatile register 14-37 is a program counter (referred to as a PC) and stores an address of the main memory 30 storing a subsequently executed command.

Although not described herein, the volatile register 14 may include a page register and a segment register for designating a large address space with the small number of bits.

The volatile register 14 may include an index register storing an offset for relatively designating the address of the main memory 30.

As such, the volatile register 14 may further include a register installed in a general CPU.

Hereinafter, the data and the address stored in the volatile register 14 are integrated to be referred to as the data.

As described above, since the volatile register 14 is the SRAM, the volatile register 14 can perform the writing and the reading at the high speed.

Subsequently, the nonvolatile memory 17 shown in Fig. 2B will be described. The nonvolatile memory 17 includes a plurality of nonvolatile memories 17-1 to 17-37 installed to correspond to the volatile registers 14-1 to 14-37 of the volatile register 14, respectively. Each of the nonvolatile memories 17-1 to 17-37 includes addresses (not shown) and is distinguished by the addresses.

As described below, each of the nonvolatile memories 17-1 to 17-37 stores (memorizes) the same data as each of the corresponding volatile registers 14-1 to 14-37. For example, the nonvolatile memory 17-1 (NR1) stores the data of the volatile register 14-1 (R1). Meanwhile, in Fig. 2B, each of the nonvolatile memories 17-1 to 17-37 of the nonvolatile memory 17 is represented by NR1 to NR32, NFPR, NCR, NLR, NCTR, and NPC by adding N to reference numerals R1 to R32, FPR, CR, LR, CTR, and PC of the volatile registers 14-1 to 14-37.

### (Operation of data processing apparatus 1)

Subsequently, the operation of the data processing apparatus 1 will be described.

First, a state (an initial state) just before the power supply unit 90 is turned on in order to use the data processing apparatus 1 at the first time will be described.

In the present embodiment, it is assumed that the data processing apparatus 1 is in a state (a state in which a main memory image is configured) in which an OS and a program are written in the nonvolatile main memory 31 of the main memory 30 in the initial state. Further, it is assumed that a reset vector is set in the nonvolatile memory 17-37 (NPC) of the nonvolatile memory 17.

Herein, the main memory image and the reset vector will be described.

It has been considered that the CPU 10 does not have the nonvolatile memory 17 and further, the main memory 30 does not have the nonvolatile main memory 31 in the data processing apparatus 1.

When the power is supplied from the power supply unit 90 (turned on), a power-on reset circuit (not shown) operates to set the reset vector in the volatile register 14-37 (PC) of the volatile register 14. The reset vector is configured to instruct the start address of a boot program stored in the flash memory that is installed outside the data processing apparatus 1. When power-on resetting is cancelled, the OS and the program which are stored in the HDD or the flash memory installed outside the data processing apparatus 1 are sequentially read through the SBIF 80 by the boot program and then written in the main memory 30 constituted by the volatile main memory 32. The texts and the constants used in the OS and the program are written in the main memory 30. If the OS and/or the program stored in the HDD and the flash memory are compressed, the OS and/or the program are extracted to be written (deployed) in the main memory 30.

A series of data set in the main memory 30 by writing (deploying) the OS and the program are referred to as the main memory image.

When the main memory image is written (set) in the main memory 30, the volatile register 14-37 (PC) is changed to an OS starting portion of the main memory 30, such that the data processing apparatus 1 becomes an operable state.

Since the nonvolatile memory media such as the HDD and the flash memory are slower in the writing and reading speeds (access speed) than the SRAM and the DRAM, a time is required to write the OS and the program in the main memory 30. As a result, the data processing apparatus 1 cannot immediately operate even when the power supply unit 90 is turned on.

Meanwhile, in the data processing apparatus 1 of the first embodiment, since the main memory 30 includes the nonvolatile main memory 31, if the main memory image is written in advance in the nonvolatile main memory 31, the OS and the program do not need to be written in the main memory 30 when the power supply unit 90 is turned on. Since the CPU 10 includes the nonvolatile memory 17, the reset vector may be written in the nonvolatile memory 17-37 (NPC) as the data.

That is, in the initial state of the data processing apparatus 1 of the first embodiment, the main memory image is written in advance in the nonvolatile main memory 31 and the reset vector is written in the nonvolatile memory 17-37 (NPC) as the data.

In the case of writing (setting) the main memory image in the nonvolatile main memory 31, the OS and the program may be sequentially read from the HDD and the flash memory installed outside the data processing apparatus 1 through the SBIF 80, and then written in the nonvolatile main memory 31, similar to the data processing apparatus 1 in which the main memory 30 does not have the nonvolatile main memory 31 and the CPU 10 does not have the nonvolatile memory 17. The main memory image may be read through the communication line (network) connected to the communication IF 60 instead of the HDD.

The main memory image itself which is separately configured as the data is read through the SBIF 80 or the communication IF 60, such that the main memory image may be written in the nonvolatile main memory 31. Also, the nonvolatile main memory 31 written with the main memory image may be mounted.

In the case of writing the reset vector in the nonvolatile memory 17-37 (NPC), the reset vector may be written in the nonvolatile memory 17-37 (NPC) from the bus IF 20 through the data cache 18 and the LOAD/STORE unit 15 by accessing the HDD and the flash memory written with the reset vector through the SBIF 80. The reset vector may be read through the communication line (network) connected to the communication IF 60 instead of the HDD.

Subsequently, a flow up to the operating state from the initial state of the data processing apparatus 1 will be described.

As described above, in the data processing apparatus 1 in the initial state, the main memory image is written in the nonvolatile main memory 31 of the main memory 30 and further, the reset vector is written in the nonvolatile memory 17-37 (NPC) of the nonvolatile memory 17.

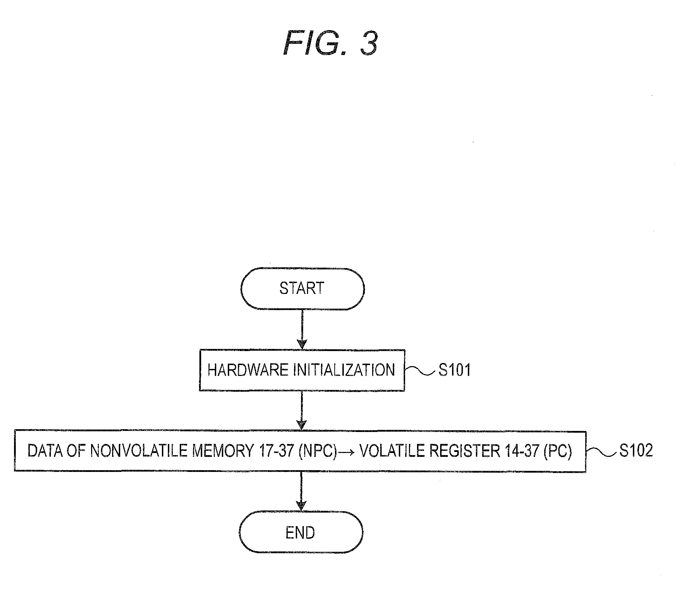

Fig. 3 is a flowchart describing a flow up to the operating state from the initial state of the data processing apparatus 1. Hereinafter, referring to Figs. 1, 2A and 2B, the flow up to the operating state from the initial state of the data processing apparatus 1 will be described according to the flowchart of Fig. 3.

When the power supply unit 90 of the data processing apparatus 1 is turned on, hardware of the data processing apparatus 1 is initialized (hardware initialization) (step S101). The hardware initialization means that all of the ALU 11, the FPU 12, the interrupt unit 13, the volatile register 14, the LOAD/STORE unit 15, the command unit 16, the data cache 18, the instruction cache 19, the bus IF 20, the volatile RAM 32, the bus bridge 40, the UIIF 50, the communication IF 60, the IOIF 70, and the SBIF 80 are reset except for the nonvolatile memory 17 and the nonvolatile main memory 31.

Herein, the reset means that information stored by registers incorporated in each of the ALU 11, the FPU 12, the interrupt unit 13, the LOAD/STORE unit 15, the command unit 16, the bus IF 20, the bus bridge 40, the UIIF 50, the communication IF 60, the IOIF 70, and the SBIF 80 are set to initial values.

Similarly, the devices that are connected to the communication IF 60, the IOIF 70, and the SBIF 80 are also reset.

After the hardware initialization, the data (reset vector) stored in the nonvolatile memory 17-37 (NPC) is written in the volatile register 14-37 (PC) (step S102).

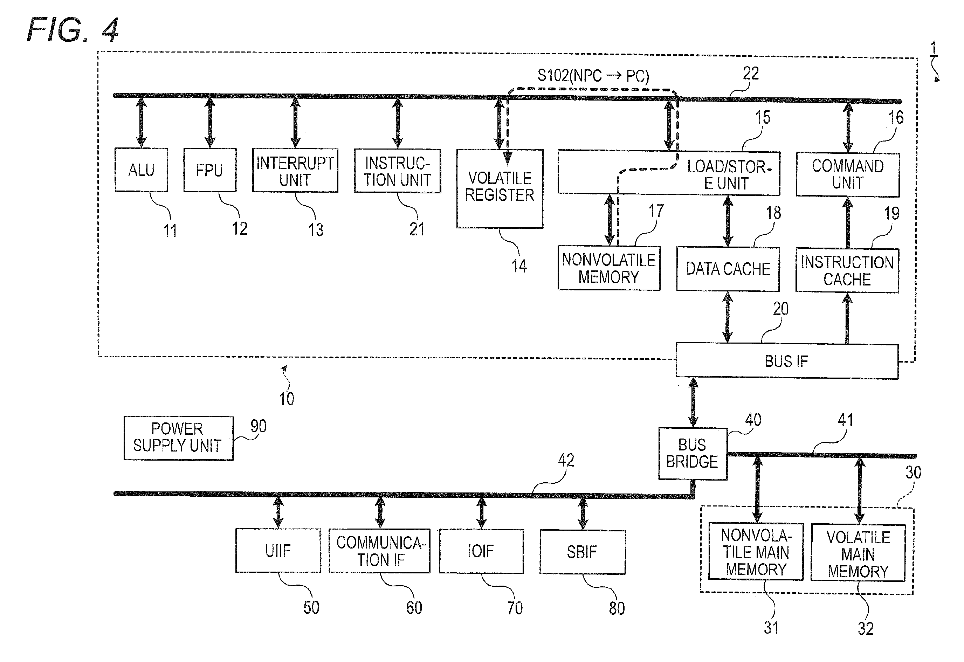

Fig. 4 is a diagram describing a route through which the data (reset vector) stored in the nonvolatile memory 17-37 (NPC) is transmitted to the volatile register 14-37 (PC) in step S102 of Fig. 3.

The transmission of the data is achieved by the hardware immediately when the hardware initialization is terminated. For example, the transmission of the data is achieved by a wired logic controlled by the instruction unit 21. Herein, the control performed by the hardware such as the wired logic is referred to as hardware control.

First, the address for designating the nonvolatile memory 17-37 (NPC) of the nonvolatile memory 17 is set, such that the data (reset vector) stored in the nonvolatile memory 17-37 (NPC) is read by the internal bus 22 through the LOAD/STORE unit 15. And, the address of the volatile register 14-37 (PC) of the volatile register 14 is set to write the reset vector in the volatile register 14-37 (PC).

The writing (transmission of the data) of the data stored in the nonvolatile memory 17-37 (NPC) into the volatile register 14-37 (PC) may be executed in a short time by the hardware control as described above. Meanwhile, the transmission of the data may be executed by the control by software (software control).

As described above, since the main memory image is memorized in the nonvolatile main memory 31 of the main memory 30, when the reset vector is written in the volatile register 14-37 (PC), the data processing apparatus 1 is in the operating state.

Herein, the data (reset vector) stored in the nonvolatile memory 17-37 (NPC) is written in the volatile register 14-37 (PC). In this case, data of other volatile registers 14-1 to 14-36 are sequentially set by the boot program which is started by the reset vector.

In this case, the data of other volatile registers 14-1 to 14-36 may also be written when the data (reset vector) stored in the nonvolatile memory 17-37 (NPC) is written in the volatile register 14-37 (PC). In the initial state, the data written in the volatile registers 14-1 to 14-36 are written in the nonvolatile memories 17-1 to 17-36 corresponding thereto. In step S102, the data of the nonvolatile memories 17-1 to 17-36 are sequentially read and then sequentially written in the volatile registers 14-1 to 14-36.

Subsequently, operations associated with the volatile register 14 and the nonvolatile memory 17 in the data processing apparatus 1 which is in the operating state will be described.

In the first embodiment, a command accompanied by the writing of the data in the volatile register 14-n (herein, n is integers of 1 to 37) of the volatile register 14 simultaneously designates even the writing of the data in the nonvolatile memory 17-n of the nonvolatile memory 17. That is, the same data are written in both the volatile register 14-n and the nonvolatile memory 17-n.

For example, a command (ADD command) instructing addition to the ALU 11 will be described.

It is assumed that the ADD command has four operands and is represented by ADD; R3; NR3; RI; R2.

That is, the ADD command instructs data (an addition result) acquired by adding data stored in the volatile register 14-2 (R2) to the data stored in the volatile register 14-1 (R1) to be written in the volatile register 14-3 (R3) and the nonvolatile memory 17-3 (NR3).

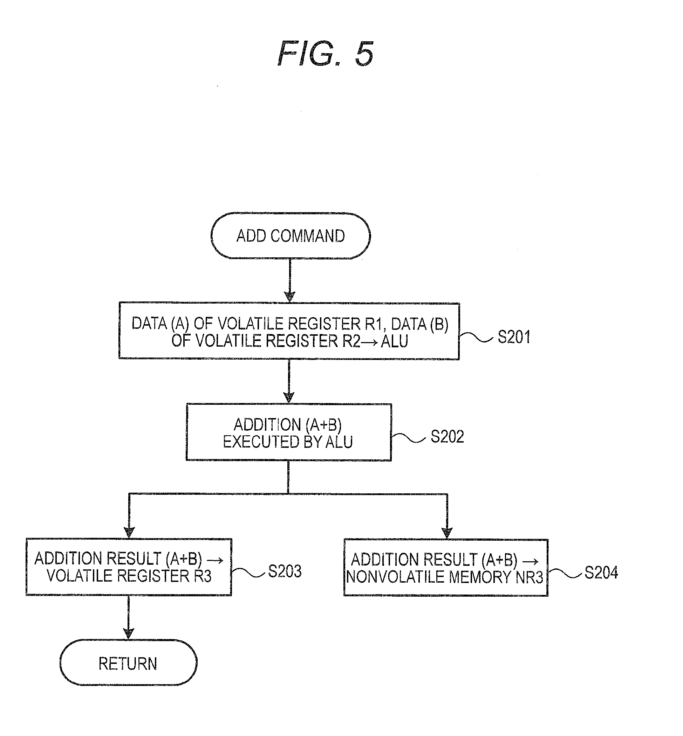

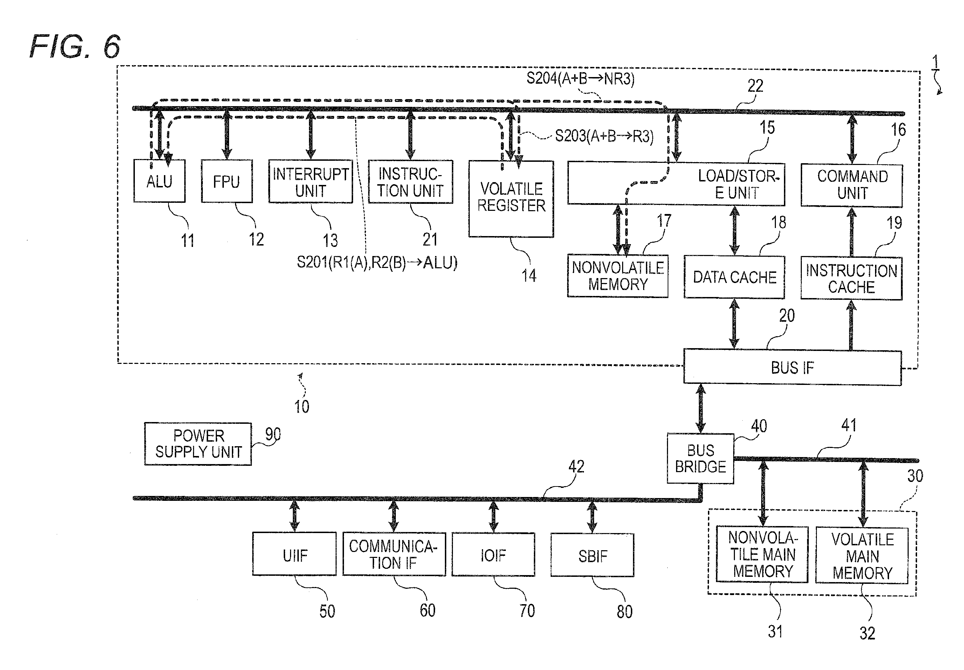

Fig. 5 is a flowchart describing the operation of the data processing apparatus 1 with respect to the ADD command. Fig. 6 is a diagram describing the movement of data with respect to the ADD command.

Referring to Figs. 5 and 6, the operation of the data processing apparatus 1 with respect to the ADD command will be described.

It is assumed that the ADD command is read from the nonvolatile main memory 31 by the address set in the volatile register 14-37 (PC). When the command unit 16 decodes the ADD command, the instruction unit 21 sequentially reads data (represented by A in Fig. 6) memorized in the volatile register 14-1 (R1) and data (represented by B in Fig. 6) memorized in the volatile register 14-2 (R2) of the volatile register 14 to the internal bus 22 to set the data in operation registers X and Y (not shown) which are incorporated in the ALU 11, respectively (step S201).

When the ALU 11 executes the addition (ADD), an addition result (A+B) is set in the operation register X (not shown) which is incorporated in the ALU 11 (step S202).

Subsequently, the instruction unit 21 reads the addition result (A+B) of the operation register X of the ALU 11 to the internal bus 22 from the ALU 11 to write the addition result in the volatile register 14-3 (R3) (step S203). The addition result (A+B) is transmitted to the LOAD/STORE unit 15 simultaneously with the writing (step S203) of the addition result (A+B) in the volatile register 14-3 (R3). Therefore, the LOAD/STORE unit 15 writes the addition result (A+B) in the nonvolatile memory 17-3 (NR3) (step S204).

The instruction unit 21 performs a next operation in transmitting the addition result to the LOAD/STORE unit 15 without waiting for completion of the writing of the addition result in the nonvolatile memory 17-3 (NR3). That is, in terms of the instruction unit 21, the data is only written in the nonvolatile memory 17. Therefore, an overhead in the operation of the data processing apparatus 1 can be suppressed.

The writing of the data to the volatile register 14-3 (R3) in the ADD command is executed by the hardware such as the wired logic that is controlled by the instruction unit 21 as an example of a first writing unit (the hardware control). Similarly, the writing of the data to the nonvolatile memory 17-3 (NR3) is executed by the hardware such as the wired logic that is controlled by the instruction unit 21 and the LOAD/STORE unit 15 as an example of a second writing unit (the hardware control).

As described above, by using the ADD command as an example, the operations of the volatile register 14 and the nonvolatile memory 17 was described.

In the data processing apparatus 1 of the first embodiment, even though the data is written in any one of the volatile registers 14-1 to 14-37, the same data are written in the nonvolatile memories 17-1 to 17-37 corresponding thereto in parallel.

Even though there are data previously written in the nonvolatile memories 17-1 to 17-37, new data are overwritten. That is, when the power supply unit 90 is turned on, each of the nonvolatile memories 17-1 to 17-37 stores the most newly updated data stored in the volatile registers 14-1 to 14-37, respectively.

The nonvolatile memory 17 is constituted by the MRAM which is writable and readable at the high speed. The data is only written in the nonvolatile memory 17 as described above. Therefore, even though the data is written in the nonvolatile memory 17, the operation of the data processing apparatus 1 is suppressed from being delayed.

Subsequently, the operation of the data processing apparatus 1 will be described, when the power supply unit 90 is turned on (restarted) after the power supply unit 90 of the data processing apparatus 1 is turned off.

When a series of processing are terminated to turn off the power supply unit 90, the data processing apparatus 1 shown in Fig. 1 loses all stored information ("0"/"1") except for the nonvolatile memory 17 and the nonvolatile main memory 31 of the main memory 30. That is, the information ("1"/"0") is lost, which are stored in the ALU 11, the FPU 12, the interrupt unit 13, the volatile register 14, the LOAD/STORE unit 15, the command unit 16, the data cache 18, the instruction cache 19, the bus IF 20, the volatile RAM 32 of the main memory 30, the bus bridge 40, the UIIF 50, the communication IF 60, the IOIF 70, and the SBIF 80.

Meanwhile, the data stored in the volatile register 14 (the volatile registers 14-1 to 14-37) just before the power supply unit 90 is turned off are stored in the nonvolatile memory 17 (the nonvolatile memories 17-1 to 17-37).

The data are stored in the nonvolatile main memory 31 without losing the main memory images such as the OS, the program, the constants and the texts, and the variables stored just before the power supply unit 90 is turned off.

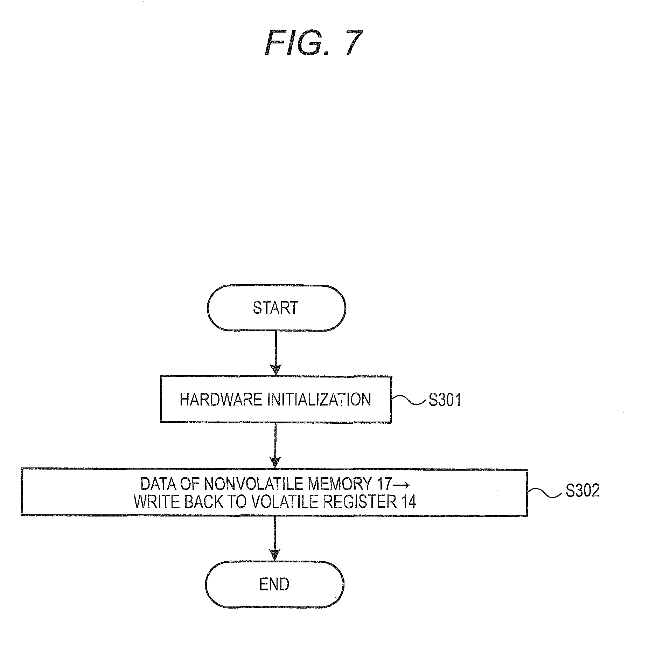

Fig. 7 is a flowchart describing a flow until the data processing apparatus 1 is operable when the power supply unit 90 of the data processing apparatus 1 is turned on (restarted) again.

When the power supply unit 90 is turned on, the hardware is initialized similarly to step S101 of Fig. 3 (step S301).

After the hardware initialization, the data stored in the nonvolatile memory 17 is transmitted to the volatile register 14 to be written-back to the volatile register 14 (step S302). The write-back is executed by the hardware such as the wired logic controlled by the instruction unit 21 and the LOAD/STORE unit as an example of a write-back unit, immediately after the hardware initialization is terminated (the hardware control).

In this case, the data of the nonvolatile memories 17-1 to 17-37 are sequentially written back to the volatile registers 14-1 to 14-37, respectively. Specifically, the data stored in the nonvolatile memory 17-1 is read to the internal bus 22 through the LOAD/STORE unit 15. Then, the data is written back to the volatile register 14-1. Subsequently, the data stored in the nonvolatile memory 17-2 is read to the internal bus 22 through the LOAD/STORE unit 15 to be written back to the volatile register 14-2. In the same manner as above, finally, the data stored in the nonvolatile memory 17-37 is read to the internal bus 22 through the LOAD/STORE unit 15 to be written back to the volatile register 14-37 and the process is terminated.

That is, in a case where the data stored in the volatile register 14 just before the power supply unit 90 is turned off is stored in the nonvolatile memory 17, the data of the nonvolatile memory 17 is written back to the volatile register 14 by the hardware control when the power supply unit 90 is turned on. By the hardware control, a time required for transmission and write-back may be shortened as compared to the case of the software control.

As a result, the volatile register 14 is restored to the state just before the power supply unit 90 is turned off. The nonvolatile main memory 31 of the main memory 30 stores the main memory image. Therefore, by calling the command from the address of the main memory 30 designated as the data (address) stored in the volatile register 14-37 (PC), the data processing apparatus 1 may perform processing continuously from the state just before the power supply unit 90 is turned off.

That is, the data processing apparatus 1 may be operable continuously from the state just before the power supply unit 90 is turned off when the data of the volatile register 14 is restored to the state just before the power supply unit 90 is turned off.

When the stored data of the nonvolatile memory 17 is written back to the volatile register 14 by the hardware control, even though an interrupt requirement occurs in the interrupt unit 13, it is possible to deal with the interrupt requirement just after the power supply unit 90 is turned on.

The writing of the data to the nonvolatile memory 17 is achieved in parallel with the writing of the data to the volatile register 14. Therefore, when the data processing apparatus 1 terminates a series of processing, such that the power supply unit 90 is turned off, a processing (routine) for writing (storing) the data of the volatile register 14 in the nonvolatile memory 17 does not need to be additionally performed.

Accordingly, in the first embodiment, when the data processing apparatus 1 terminates a series of processing, the power supply unit 90 can be immediately turned off. That is, the data of the volatile register 14 can be suppressed from not being transmitted to (stored in) the nonvolatile memory 17 when the power supply unit 90 is suddenly turned off.

When the nonvolatile memory 17 is constituted by the nonvolatile memory element which is writable and readable at the high speed and has less limitation in the number of writing times, the operation of the CPU 10 may not be slow by giving a standby (waiting) for writing in the nonvolatile memory 17 or setting a clock frequency to a small value. Therefore, in the first embodiment, even though the data of the volatile register 14 is transmitted to (stored in) the nonvolatile memory 17, an operational speed of the data processing apparatus 1 is not limited.

In the above description, the nonvolatile main memory 31 is included in the main memory 30. However, by constituting the main memory 30 by only the volatile main memory 32, the main memory 30 may be maintained to be the on state or may be backed up with a battery.

In the above description, the writing of the data to the volatile register 14 and the nonvolatile memory 17 and the write-back of the data stored in the nonvolatile memory 17 to the volatile register 14 are performed by the hardware control, but may be performed by the software control if there is no limit in a processing speed.

### (Image forming apparatus 100)

Subsequently, a case will be described where the above data processing apparatus 1 is configured as an instruction unit of the image forming apparatus 100.

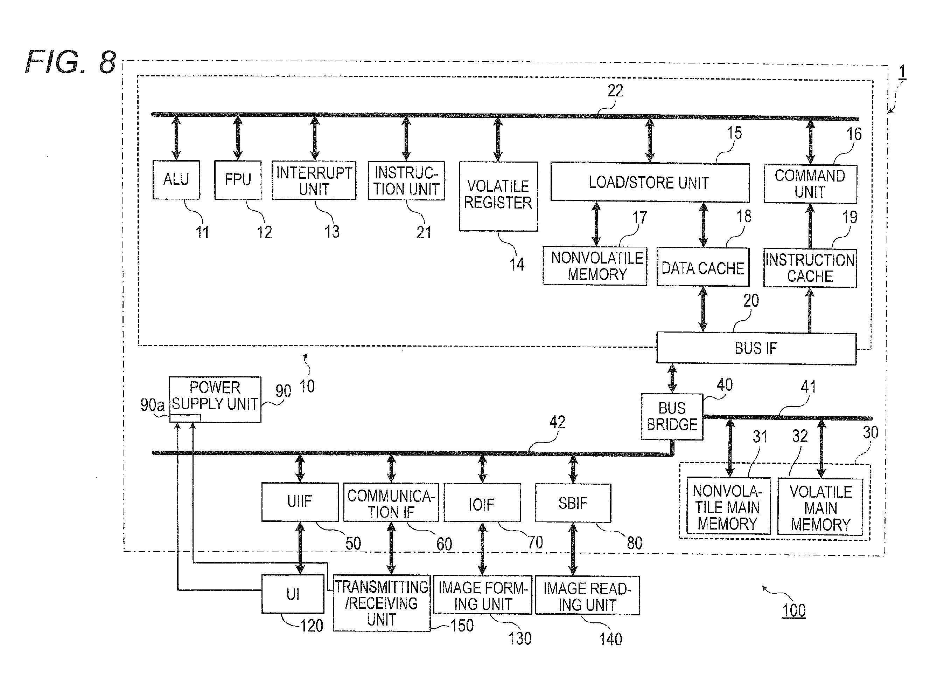

Fig. 8 is a diagram showing an example of a configuration of the image forming apparatus 100.

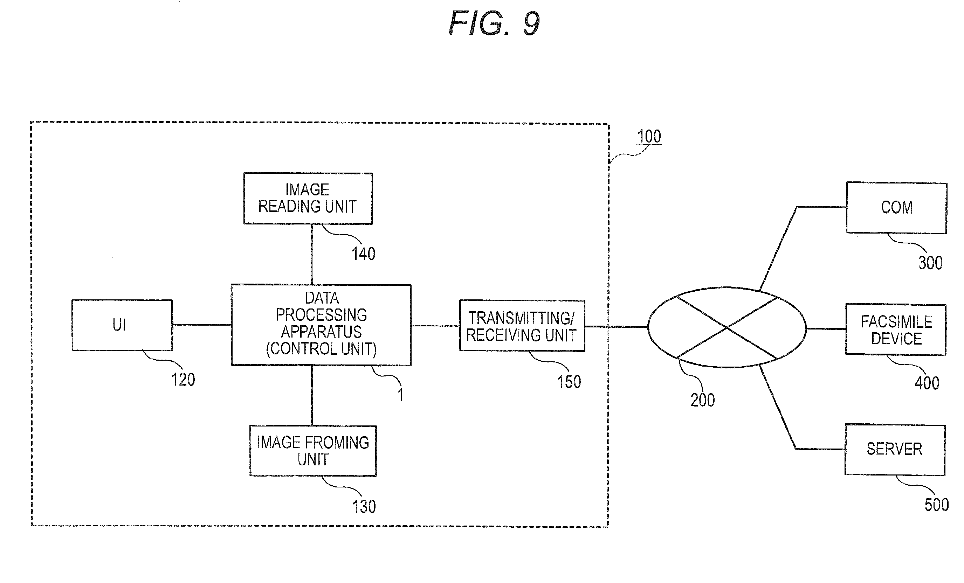

The image forming apparatus 100 includes a user interface (UI) 120 for a user to transmit a signal, such as a button, an image forming unit 130 such as a printer, an image reading unit 140 such as a scanner, and a transmitting/receiving unit 150 transmitting/receiving data to/from a communication line 200 (see Fig. 9 to be described below), in addition to the data processing apparatus 1 shown in Fig. 1.

Herein, the UI 120 is connected to the UIIF 50 of the data processing apparatus 1, the image forming unit 130 is connected to the IOIF 70 of the data processing apparatus 1, the image reading unit 140 is connected to the SBIF 80, and the transmitting/receiving unit 150 is connected to the communication IF 60, respectively.

Fig. 9 is a diagram describing the relationship between the image forming apparatus 100 and devices connected to the communication line 200.

The image forming apparatus 100 is connected to the communication line 200 such as the Internet and the telephone network through the transmitting/receiving unit 150. A computer (COM) 300, a facsimile device 400, and a server 500 are connected to the communication line 200.

The basic operation of the image forming apparatus 100 will be described.

In the image forming apparatus 100, an image read from the image reading unit 140 is printed on a writing medium such as paper by the image forming unit 130.

The image forming unit 130 may be a type in which a latent image is written in a photosensitive drum by an LED and in which the latent image is developed by a toner and transferred to the writing medium or may be a type in which an image is formed on the writing medium by using an inkjet. The image reading unit 140 may be a type in which a light receiving element array is scanned or a type in which the image is read by using an imaging device such as a CCD.

In the image forming apparatus 100, the data such as the image transmitted from the computer (COM) 300 or the facsimile device 400 through the communication line 200 is printed on the writing medium by using the image forming unit 130.

Meanwhile, in the image forming apparatus 100, the data such as the image read by the image reading unit 140 is transmitted to the computer (COM) 300 and/or the facsimile device 400 which are placed outside the image forming apparatus 100 from the transmitting/receiving unit 150 through the communication line 200.

In the image forming apparatus 100, a main memory image or a reset vector stored in the server 500 may be written in the nonvolatile main memory 31 or the nonvolatile memory 17-37 (NPC) of the data processing apparatus 1 from the server 500 through the communication line 200.

The image forming apparatus 100 may not be energized when not being used.

Further, the image forming apparatus 100 may be rapidly operable when the image forming apparatus 100 intends to be used.

In the image forming apparatus 100, a normal mode in which all functions are operable (on state) and a power-saving mode in which only some functions are operable (on state) while most other functions are stopped (off state) are provided. The image forming apparatus 100 in the power-saving mode is returned to the normal mode when receiving a facsimile through the communication line 200 or when receiving a signal for starting the use from the user.

The power-saving mode will be described with reference to Fig. 8.

In the power-saving mode, in order to improve the power saving effect, the CPU 10, the main memory 30, and the bus bridge 40 of the data processing apparatus 1 as the instruction unit may also be in the off state. Further, the power supply unit 90 may also be in the off state. That is, in the power-saving mode, only the UI 120, the transmitting/receiving unit 150, and a power feeding control circuit 90a of the power supply unit 90 of the data processing apparatus 1 to be described below are in the on state, and the CPU 10, the main memory 30, the bus bridge 40, and parts except for the power feeding control circuit 90a of the power supply unit 90 of the data processing apparatus 1, and the image forming unit 130 and the image reading unit 140 of the image forming apparatus 100 are in the off state.

A signal line is provided to transmit the signal to the power feeding control circuit 90a of the power supply unit 90 of the data processing apparatus 1 from each of the UI 120 and the transmitting/receiving unit 150.

The power feeding control circuit 90a installed in the power supply unit 90 turns on the power supply unit 90 by receiving the signal from the UI 120 or the transmitting/receiving unit 150 and starts to supply power to the CPU 10, the main memory 30 and the bus bridge 40 of the data processing apparatus 1, the image forming unit 130, and the image reading unit 140 which are in the off state.

That is, even in the case of the power-saving mode, power is supplied to the UI 120, the transmitting/receiving unit 150, and the power feeding control circuit 90a of the power supply unit 90 of the data processing apparatus 1 from a power supply (not shown).

Although the power supply unit 90 of the data processing apparatus 1 supplies power to the image forming unit 130 and the image reading unit 140, the power feeding control circuit such as the power feeding control circuit 90a may be provided so as to start supplying power to the image forming unit 130 and the image reading unit 140 by the signal from the UI 120 or the transmitting/receiving unit 150.

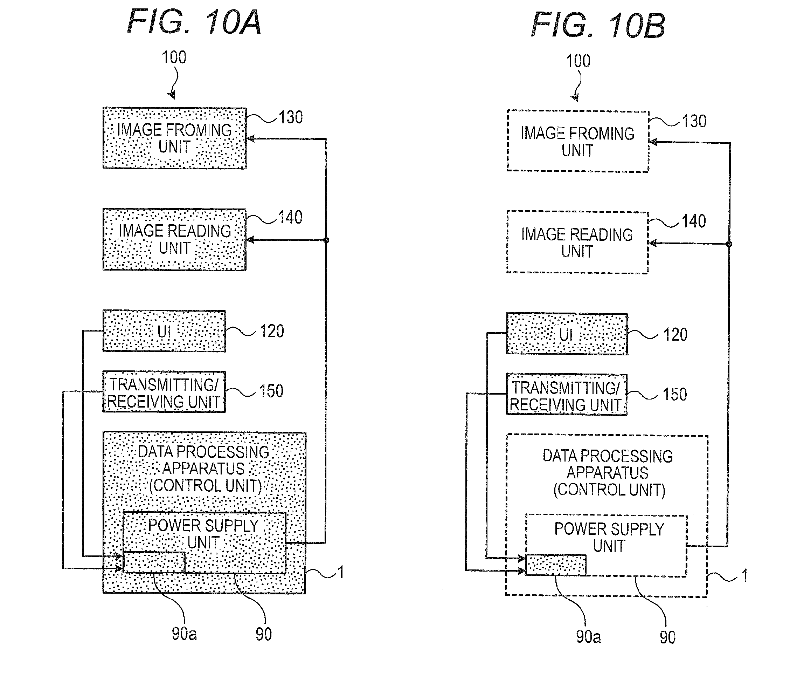

Figs. 10A and 10B are diagrams showing a comparison between the normal mode and the power-saving mode of the image forming apparatus 100. Fig. 10A shows the normal mode and Fig. 10B shows the power-saving mode. Parts which are in the on state are surrounded by a solid line and attached with halftone dots. Meanwhile, parts which are in the off state are surrounded by a dashed line.

In the normal mode shown in Fig. 10A, the data processing apparatus 1, the UI 120, the image forming unit 130, the mage reading unit 140, and the transmitting/receiving unit 150 are all in the on state. Meanwhile, in the power-saving mode shown in Fig. 10B, the UI 120, the transmitting/receiving unit 150, and the power feeding control circuit 90a of the power supply unit 90 of the data processing apparatus 1 are in the on state, and the image forming unit 130, the image reading unit 140, and the data processing apparatus 1 except for the power supply control circuit 90a of the power supply unit 90 are in the off state (in an idle state).

In the power-saving mode, when the image reading unit 140 is a scanner, it is assumed that the user raises an upper cover of the scanner in order to use the image forming apparatus 100. Since the upper cover of the scanner is one of the UI 120, a signal for instructing the image forming apparatus 100 to being started is transmitted to the power feeding control circuit 90a of the power supply unit 90 of the data processing apparatus 1 from the UI 120 as the user raises the upper cover of the scanner. As a result, the power supply unit 90 is turned on. As described above, the data stored in the nonvolatile memory 17 of the data processing apparatus 1 is transmitted to the volatile register 14, such that the data processing apparatus 1 is restored to the state just before the power supply unit 90 is turned off (the state before the data processing apparatus 1 enters the power saving mode).

Power is supplied from the power supply unit 90 even to the image forming unit 130 and the image reading unit 140, and then each of them becomes the operating state.

As a result, the image forming apparatus 100 is restored to the state just before entering the power-saving mode.

As described above, since the data stored in the nonvolatile memory 17 is rapidly written back to the volatile register 14 and the main memory image is stored in the nonvolatile main memory 31 of the main memory 30, the image forming apparatus 100 is rapidly restored from the power-saving mode to the normal mode.

Similarly, in the power-saving mode, when the data is received from the facsimile device 400 through the communication line 200, the transmitting/receiving unit 150 detects the reception of the data to transmit the signal for instructing the image forming apparatus 100 to be started to the power feeding control circuit 90a of the power supply unit 90 of the data processing apparatus 1. Similarly to the above-mentioned case, the data processing apparatus 1 is restored to the state just before the power supply unit 90 is turned off (the state before the data processing apparatus 1 enters the power-saving mode).

Power is supplied from the power supply unit 90 even to the image forming unit 130 and the image reading unit 140, and then each of them becomes the operating state.

As a result, the image forming apparatus 100 is restored to the state just before entering the power-saving mode.

The image forming apparatus 100 is restored from the power-saving mode to the normal mode to continuously perform processing from the state just before entering the power-saving mode. Therefore, the data processing apparatus 1 described in the first embodiment may be used as the instruction unit of the image forming apparatus 100.

In a case where the instruction unit of the image forming apparatus 100 is the data processing apparatus 1 that does not include the nonvolatile memory 17 and the nonvolatile main memory 31, the data of the volatile register 14 may be maintained to be the on state or be stored in the volatile main memory 32 which is backed up with the battery when the normal mode is switched to the power-saving mode, and the data stored in the volatile main memory 32 is written back to the volatile register 14 when the power-saving mode is switched to the normal mode. However, in this method, when the normal mode is switched to the power-saving mode, a time (routine) for storing the data of the volatile register 14 to the volatile main memory 32 is required and when the power-saving mode is switched to the normal mode, a time (routine) for writing back the data of the volatile main memory 32 to the volatile register 14 is required similarly. Therefore, as compared with the image forming apparatus 100 using the data processing apparatus 1 of the present embodiment as the instruction unit, the standby time is extended when the image forming apparatus 100 is switched to the normal mode from the power saving mode, and is switched to the power-saving mode from the normal mode.

Power needs to be supplied to maintain the volatile main memory 32 to be the on state or back up the volatile main memory 32 with the battery.

In the above description, the case where the power-saving mode is switched to the normal mode has been described.

Even a case that is a stop mode in which the UI 120, the transmitting/receiving unit 150, and the power feeding control circuit 90a of the power supply unit 90 are all in the off state is switched to the normal mode is similar. That is, since the data stored in the nonvolatile memory 17 is rapidly written back to the volatile register 14, the image forming apparatus 100 is rapidly restored from the stop mode to the normal mode.

When the main memory 30 includes the nonvolatile main memory 31 to store the main memory image, the stop mode is more rapidly switched to the normal mode.

In the first embodiment, when the power supply unit 90 is turned on, the data (stored data) stored in the nonvolatile memory 17 is written back to the volatile register 14 through the LOAD/STORE unit 15 and the internal bus 22. In this method, based on the hardware control by the instruction unit 21, the data of the nonvolatile memories 17-1 to 17-37 are sequentially read to the internal bus 22 through the LOAD/STORE unit 15 and then written back to the volatile registers 14-1 to 14-37.

In the data processing apparatus 1 according to the second embodiment, an exclusive data transmission bus 23 for transmitting the data is provided between the nonvolatile memory 17 and the volatile register 14. That is, the data is not transmitted through the LOAD/STORE unit 15 in the data processing apparatus 1 of the first embodiment. Therefore, a time required to write back the data of the nonvolatile memory 17 to the volatile register 14 is decreased.

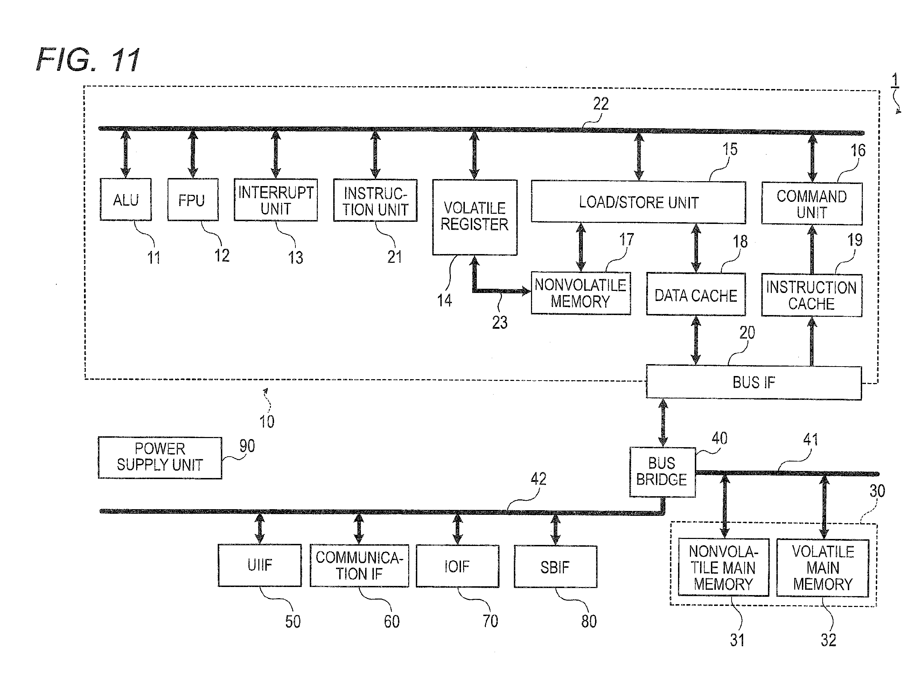

Fig. 11 is a diagram showing an example of a configuration of the data processing apparatus 1 in the second embodiment.

As a result, in the data processing apparatus 1 of the second embodiment, when the power supply unit 90 is turned on, the data of the nonvolatile memory 17 is written back to the volatile register 14 through the data transmission bus 23.

The write-back of the data of the nonvolatile memory 17 to the volatile register 14 through the data transmission bus 23 may be performed by hardware control by, for example, a sequencer using a counter. For example, the number of the data to be written-back is set in the counter, and the data of the nonvolatile memory 17 are sequentially transmitted to the volatile register 14 and written-back until a value of the counter becomes zero while decreasing the value of the counter.

The write-back may be performed by hardware control using direct memory access (DMA). In this case, by setting a beginning address of the nonvolatile memory 17 which is a transmission source, the number of the data to be written-back and a beginning address of the volatile register 14 which is a transmission destination, the data stored in the nonvolatile memory 17 can be transmitted to the volatile register 14 to be written back.

In this method, since each of the data can be successively transmitted as a small number of clocks, a time required for writing back the data is decreased.

As described above, in the second embodiment, a time required for writing back the data of the nonvolatile memory 17 to the volatile register 14 is short when the power supply unit 90 is turned on, such that a time until the data processing apparatus 1 is operable is decreased, as compared with the first embodiment.

Although a detailed description is omitted, the data processing apparatus 1 in the second embodiment may be the instruction unit (data processing apparatus 1) of the image forming apparatus 100 described in the first embodiment.

In the first embodiment and the second embodiment, when the power supply unit 90 is turned on, the data stored in the nonvolatile memory 17, that is, the data of the volatile register 14 just before the power supply unit 90 is turned off is written back to the volatile register 14.

However, in some cases, the data of the volatile register 14 just before the power supply unit 90 is turned off is not written back but the volatile register 14-37 (PC) may need to be used as the reset vector. That is, the data processing apparatus 1 may need to be reset. In this case, the data processing apparatus 1 becomes operable when the reset vector is set in the volatile register 14-37 (PC).

As described above, in the first embodiment and the second embodiment, the data of the volatile register 14-37 (PC) of the CPU 10 is changed at all times as the operation of the data processing apparatus 1 is in progress. As a result, the data of the nonvolatile memory 17-37 (NPC) corresponding to the volatile register 14-37 (PC) is also changed.

Therefore, in the third embodiment, a nonvolatile reset vector memory 24 storing the reset vector is provided.

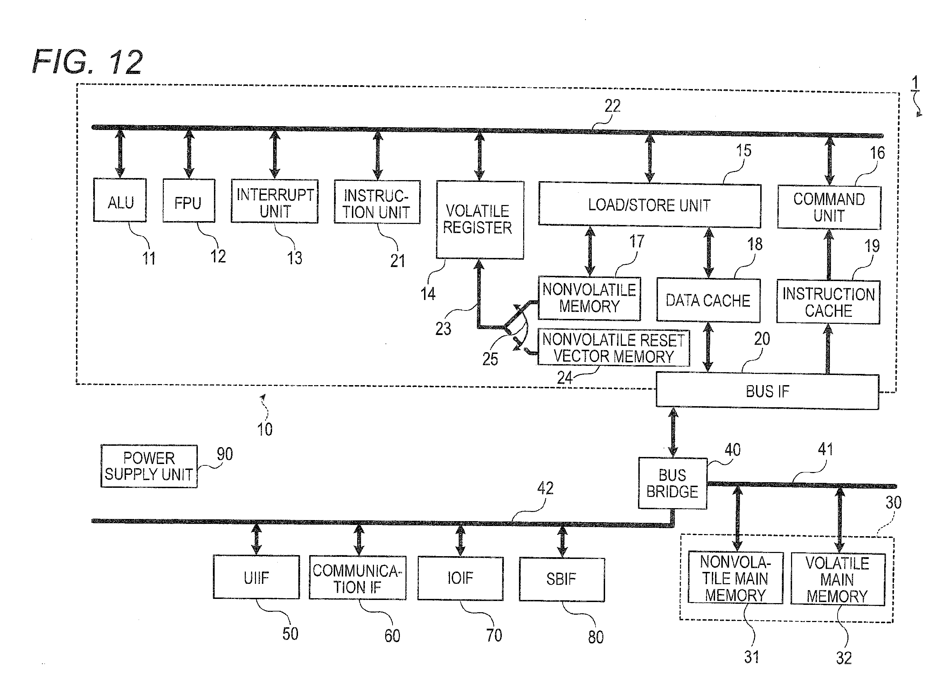

Fig. 12 is a diagram showing an example of a configuration of the data processing apparatus 1 in the third embodiment.

The data processing apparatus 1 of the third embodiment further includes the nonvolatile reset vector memory 24 storing the reset vector and a switch unit 25 as an example of a switching unit, as compared to the data processing apparatus 1 of the second embodiment shown in Fig. 11.

The data transmission bus 23 is connected to any one of the nonvolatile memory 17 and the nonvolatile reset vector memory 24 by the switching of the switch unit 25.

Since other components of the data processing apparatus 1 of the third embodiment are the same as those of the data processing apparatus 1 of the second embodiment, the corresponding components will not be described.

Therefore, in the third embodiment, by switching the connection of the data transmission bus 23 to any one of the nonvolatile memory 17 and the nonvolatile reset vector memory 24 by using the switch unit 25, the data of the volatile register 14 just before the power supply unit 90 is turned off can be written back to or the reset vector can be written on the volatile register 14 when the power supply unit 90 is turned on.

The nonvolatile reset vector memory 24 may be constituted by the nonvolatile memory elements, which are writable and readable at the high speed and has less limitation in the number of rewriting times, such as the MRAM, the FeRAM, the PRAM, and the ReRAM, similar to the nonvolatile memory 17 and the nonvolatile main memory 31. However, when the number of rewriting times or the operational speed is not limited, the nonvolatile reset vector memory 24 may be constituted by the EEPROM, the flash memory, and the HDD.

Subsequently, the operation of the data processing apparatus 1 in the third embodiment will be described.

The switch unit 25 switches the connection of the data transmission bus 23 to any one of the nonvolatile memory 17 and the nonvolatile reset vector memory 24 based on a signal from the outside of the data processing apparatus 1. Therefore, by the signal from the outside of the data processing apparatus 1, when the power supply unit 90 is turned on, the data of the nonvolatile memory 17 can be written back to the volatile register 14 or the reset vector can be written on the volatile register 14.

As an example of the signal from the outside of the data processing apparatus 1, when the data processing apparatus 1 is actuated (when a switch of the power supply unit 90 is pressed) while the UI 120 shown in Fig. 8 as a special booting switch is pressed, the UI 120 as an example of a designation unit may transmit a signal for selecting the reset vector. Meanwhile, when the data processing apparatus 1 is actuated (when the switch of the power supply unit 90 is pressed) without pressing the special booting switch, the UI 120 may transmit a signal for selecting the data of the nonvolatile memory 17.

When the data processing apparatus 1 is actuated (when the switch of the power supply unit 90 is pressed) while a plurality of switches which are connected to the UI 120 are simultaneously pressed, the UI 120 may transmit the signal for selecting the reset vector, and when the data processing apparatus 1 is actuated (when the switch of the power supply unit 90 is pressed) without pressing the plurality of switches simultaneously, the UI 120 may transmit the signal for selecting the data of the nonvolatile memory 17.

When a button (the switch of the power supply unit 90) for actuating the data processing apparatus 1 is pressed for a relatively longer time, the UI 120 may transmit the signal for selecting the reset vector, and when the button (the switch of the power supply unit 90) for actuating is pressed for a relatively shorter time, the UI 120 may transmit the signal for selecting the data of the nonvolatile memory 17.

When the reset vector is selected, the data transmission bus 23 is connected to the nonvolatile reset vector memory 24 through the switch unit 25. Meanwhile, the connection of the data transmission bus 23 to the nonvolatile reset vector memory 24 through the switch unit 25 is performed by hardware control such as switching of a transistor switch by a signal from the outside of the data processing apparatus 1.

Similarly to the write-back of the data stored in the nonvolatile memory 17 to the volatile register 14 in the second embodiment, the reset vector stored in the nonvolatile reset vector memory 24 is written on the volatile register 14-37 (PC).

As a result, the data processing apparatus 1 reads a beginning address of the program to be executed from an address of the main memory 30 designated by the reset vector to start to operate.

Meanwhile, when the nonvolatile memory 17 is selected, the data transmission bus 23 is connected to the nonvolatile memory 17 through the switch unit 25. Similarly to the second embodiment, the data stored in the nonvolatile memory 17 is transmitted to the volatile register 14. Therefore, a detailed description thereof will be omitted.

Although the detailed description is omitted, the data processing apparatus 1 in the third embodiment may be the instruction unit (the data processing apparatus 1) of the image forming apparatus 100 described in the first embodiment.

In the third embodiment, as shown in Fig. 12, each of the nonvolatile memory 17 and the nonvolatile reset vector memory 24 is installed separately. However, both the nonvolatile memory 17 and the nonvolatile reset vector memory 24 are nonvolatile. Therefore, a nonvolatile memory 17-38 storing the reset vector may be installed in the nonvolatile memory 17.

The data processing apparatus 1 of the fourth embodiment further includes the nonvolatile memory 17-38 storing the reset vector added to the nonvolatile memory 17 of the data processing apparatus 1 (see Fig. 1) of the first embodiment.

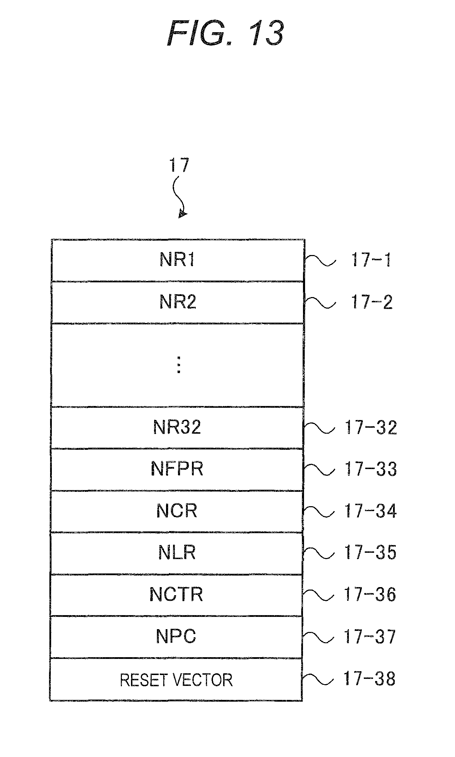

Fig. 13 is a diagram describing an example of a configuration of the nonvolatile memory 17 in the data processing apparatus 1 of the fourth embodiment.

The nonvolatile memory 17 of the data processing apparatus 1 of the fourth embodiment includes the nonvolatile memories 17-1 to 17-37 maintaining (storing) the data of the volatile register 14 just before the power supply unit 90 is turned off and a nonvolatile memory 17-38 storing the reset vector. The nonvolatile memories 17-1 to 17-37 are the same as the nonvolatile memories 17-1 to 17-37 in the first embodiment shown in Fig. 2B. The nonvolatile memory 17-38 storing the reset vector is installed subsequently to the nonvolatile memory 17-37.

Meanwhile, the data processing apparatus 1 of the fourth embodiment does not include the data transmission bus 23 of the data processing apparatus 1 of the second embodiment. Therefore, the size (area) of the CPU 10 is smaller than that in the case where the data processing apparatus 1 includes the data transmission bus 23.

Subsequently, referring to Fig. 1, an operation when the power supply unit 90 is turned on will be described.

When the power supply unit 90 is turned on, the reset vector is selected in the same manner as the third embodiment. In this case, the address of the nonvolatile memory 17-38 storing the reset vector is designated. The reset vector is read to the internal bus 22 from the nonvolatile memory 17-38 through the LOAD/STORE unit 15. The reset vector read to the internal bus 22 is written in the volatile register 14-37 (PC). As described in the first embodiment, this is executed by hardware controlled by the instruction unit 21 (hardware control).

As a result, the data processing apparatus 1 reads the beginning address of the executing program from the address of the main memory 30 designated by the reset vector to start the operation.

Meanwhile, when the power supply unit 90 is turned on and the instruction unit 21 does not receive the signal for designating the reset vector, the address read from the nonvolatile memory 17 is set in the nonvolatile memory 17-1. And, the data of the nonvolatile memories 17-1 to 17-37 are sequentially read to the internal bus 22 from the nonvolatile memory 17 through the LOAD/STORE unit 15. The data are sequentially written back to the volatile registers 14-1 to 14-37 of the volatile register 14.

As a result, the data processing apparatus 1 is restored to the state just before the power supply unit 90 is turned off, and the data processing apparatus 1 executes processing continuously from the state just before the power supply unit 90 is turned off.

Although the detailed description is omitted, the data processing apparatus 1 in the fourth embodiment may be the instruction unit (the data processing apparatus 1) of the image forming apparatus 100 described in the first embodiment.

In the fifth embodiment, the nonvolatile memory 17-38 storing the reset vector is added to the nonvolatile memory 17 of the data processing apparatus 1 of the second embodiment. Accordingly, the nonvolatile memory 17 has a configuration shown in Fig. 13 similarly to the fourth embodiment.

In the fifth embodiment, the data stored in the nonvolatile memories 17-1 to 17-37 are written back to the volatile register 14 or the reset vector stored in the nonvolatile memory 17-38 is written on the volatile register 14-37 (PC), through the data transmission bus 23.

Since the method for selecting any one of the reset vector and the data stored in the nonvolatile memories 17-1 to 17-37 is the same as that of the fourth embodiment, the method will not be described.

The write-back of each of the data of the nonvolatile memories 17-1 to 17-37 to the volatile register 14 and the writing of the reset vector of the nonvolatile memory 17-38 on the volatile register 14 are achieved similarly to the second embodiment shown in Fig. 11 and through the data transmission bus 23. Therefore, a detailed description thereof will be omitted.

Although the detailed description is omitted, the data processing apparatus 1 in the fifth embodiment may be the instruction unit (the data processing apparatus 1) of the image forming apparatus 100 described in the first embodiment.

As described above, the data processing apparatuses 1 according to the first to fifth embodiments include the nonvolatile memory 17 constituted by the nonvolatile memories, which are writable and readable at the high speed and has less limitation in the number of rewriting times, such as the MRAM, the FeRAM, the PRAM, and the ReRAM, such that the same data is written on the nonvolatile memory 17 in parallel with the writing of the data on the volatile register 14. As a result, when the power supply unit 90 is turned off and thereafter, turned on again, by writing back the data stored in the nonvolatile memory 17 to the volatile register 14, the data processing apparatus 1 can be restored to the state just after the power supply unit 90 is turned off. Accordingly, the operation of the data processing apparatus 1 may be restarted from the state just before the power supply unit 90 is turned off.

In the first to fifth embodiments, the nonvolatile memory 17 is installed separately from the data cache 18. However, the data cache 18 may be constituted by the nonvolatile memory elements, and some elements thereof may be used as the nonvolatile memory 17.

Even though the nonvolatile memory 17 is constituted by the nonvolatile memory element and the data cache 18 is constituted by the volatile memory element, the nonvolatile memory 17 and the data cache 18 may be placed in one memory space (address space).

If the nonvolatile memory 17 and the data cache 18 have the same access speed, the data may be written (saved) in the nonvolatile memory 17 at the access speed of the data cache 18.

In the first to fifth embodiments, the nonvolatile main memory 31 and the volatile main memory 32 are installed, but only the nonvolatile main memory 31 may be installed.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A data processing apparatus comprising:
an operation unit that performs an arithmetic operation and a logical operation;
a writable and readable volatile register that stores data used in the operations performed by the operation unit;
a writable and readable nonvolatile memory that stores the data in parallel with the volatile register, the data stored in the nonvolatile memory being the data stored in the volatile register;
a first writing unit that writes the data in the volatile register;
a second writing unit that writes the data in the nonvolatile memory in parallel with the first writing unit every time the data is written in the volatile register; and
a write-back unit that writes back the data stored in the nonvolatile memory to the volatile register when a power supply of the data processing apparatus is turned on.

2. The data processing apparatus according to claim 1, further comprising:
a data transmission bus that is between the nonvolatile memory and the volatile register,
wherein the write-back unit writes back the data stored in the nonvolatile memory to the volatile register through the data transmission bus.

3. The data processing apparatus according to claim 1 or 2, wherein:
the nonvolatile memory stores a reset vector for resetting the data processing apparatus in addition to the data used in the operations performed by the operation unit,
the data processing apparatus further includes a designation unit that designates which one of the data and the reset vector is written back to the volatile register, and
the write-back unit writes back any one of the data and the reset vector which is designated by the designation unit to the volatile register.

4. The data processing apparatus according to claim 1 or 2, further comprising:
a nonvolatile reset vector memory that stores a reset vector for resetting the data processing apparatus;
a designation unit that designates which one of the data and the reset vector is written back to the volatile register; and
a switching unit that switches a connection to any one of the nonvolatile memory storing the data and the nonvolatile reset vector memory storing the reset vector which is designated by the designation unit,
wherein the write-back unit writes back the any one of the data and the reset vector to the volatile register from the nonvolatile memory or the nonvolatile reset vector memory to which the connection is switched by the switch unit.

5. The data processing apparatus according to any one of claims 1 to 4, further comprising:
a nonvolatile main memory that stores a program for controlling at least an operation of the data processing apparatus.

6. The data processing apparatus according to any one of claims 1 to 5,
wherein the nonvolatile memory is any one of an MRAM, a FeRAM, a PRAM, and a ReRAM.

7. The data processing apparatus according to claim 5 or 6,
wherein the nonvolatile main memory is any one of a MRAM, a FeRAM, a PRAM, and a ReRAM.

8. A data processing method for use in a data processing apparatus, the apparatus comprising a writable and readable volatile register operable to store data used in an arithmetic operation and a logical operation, and comprising a writable and readable nonvolatile memory operable to store the data in parallel with the volatile register, the data stored in the nonvolatile memory being the data stored in the volatile register, the method comprising:
performing said arithmetic operation and said logical operation;
writing the data in the volatile register;
writing the data in the nonvolatile memory in parallel with the writing of the data in the volatile register every time the data is written in the volatile register; and
writing back the data stored in the nonvolatile memory to the volatile register when a power supply of the data processing apparatus is turned on.

9. A computer program which, when executed on a data processing apparatus, causes the apparatus to carry out a data processing method according to claim 8.
